# EUROPÄISCHE PATENTANMELDUNG

(11) **EP 3 848 590 A1**
(43) Veröffentlichungstag der Anmeldung: **14.07.2021**
(21) Anmeldenummer: 20150566.6
(22) Anmeldetag: 07.01.2020
(51) Int. Cl.: F04D 29/44

(54) **ABSTRÖMBEREICH EINES VERDICHTERS, VERDICHTER MIT EINEM SOLCHEN ABSTRÖMBEREICH, UND TURBOLADER MIT DEM VERDICHTER**

(71) Anmelder: ABB Schweiz AG, 5400 Baden (CH)
(72) Erfinder: Rusch, Daniel, 5430 Wettingen (CH)
(74) Vertreter: Zimmermann & Partner Patentanwälte mbB

(57) **Zusammenfassung**

Die Erfindung betrifft einen Abströmbereich (10) eines Verdichters (20), insbesondere eines Radialverdichters oder Diagonalverdichters. Der Abströmbereich (10) umfasst einen Strömungskanal (11), welcher von einer shroudseitigen Seitenwand (12) und einer nabenseitigen Seitenwand (13) begrenzt wird. Die nabenseitige Seitenwand (13) weist in einem Bereich (14) des Verdichterradaustritts eine Kontur auf, die derart ausgebildet ist, dass die Querschnittsflächen des Strömungskanals in Strömungsrichtung (1) abnehmen, ein Minimum durchlaufen und wieder zunehmen. Ferner betrifft die Erfindung einen Verdichter (20), insbesondere einen Radialverdichter oder Diagonalverdichter, mit dem erfindungsgemäßen Abströmbereich (10) sowie einen Turbolader mit dem Verdichter (20).

## Beschreibung

### TECHNISCHES GEBIET

Die Erfindung bezieht sich auf das Gebiet der Verdichter, insbesondere der Radialverdichter und Diagonalverdichter. Insbesondere betrifft die Erfindung einen Abströmbereich stromab eines Verdichterrades und stromauf eines Diffusorbereichs eines solchen Verdichters.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Verdichter, insbesondere von Radial- oder Diagonalverdichtern, mit hochschluckenden Verdichterräder weisen hohe Verhältnisse des Verdichterradeintrittsradius R₁ zum Verdichterradaustrittsradius R₂ auf, z. B. R₁/R₂ > 0,75. Typischerweise wird die Strömung im Impeller-, respektive im Impeller- und Diffusorbereich, in radiale Richtung umgelenkt, was eine starke Strömungsumlenkung und eine starke Krümmung der Shroud-Kontur bedingt.

Des Weiteren werden typischerweise zudem hohe Druckverhältnisse gefordert, so dass das Verdichterrad-Nabendesign vorzugsweise schlank gestaltet werden sollte, um die Fliehkraftbelastung unterhalb der mechanischen Materialgrenzen zu halten. Eine schlank gestaltete Nabe führt typischerweise zu einem geringen Austrittswinkel der Verdichterrad-HubKontur (zur Radialen gemessen).

Wird der Meridionalkanal im Diffusor konventionell ausgeführt (z.B. rein radial am Hub und mit Pinch (krümmungsstetig) an der Shroud), so führt dies zunächst zu einer starken Verjüngung des Strömungsquerschnitts stromab des Verdichterradaustritts. Dies führt typischerweise zu einer Erhöhung der Eintrittsmachzahl in den Diffusor, insbesondere an den Vorderkanten der Diffusorschaufeln. Um dies zu vermeiden kann der Diffusor, insbesondere die Diffusorschaufeln, weiter stromab angeordnet werden. Eine andere aus dem Stand der Technik bekannte Abhilfemaßnahmen ist beispielsweise ein Kanalrücksprung an der Hubkontur. Es hat sich jedoch herausgestellt, dass die bekannten Lösungen gewisse Nachteile bezüglich des Wirkungsgrades, des Bauvolumens und der Kosten des Verdichters mit sich bringen.

### KURZE DARSTELLUNG DER ERFINDUNG

Die Aufgabe der vorliegenden Erfindung besteht darin, einen Abströmbereich eines Verdichters, einen Verdichter und einen Turbolader bereitzustellen, die mindestens hinsichtlich einer der aus dem Stand der Technik bekannten Nachteile verbessert ist.

Zur Lösung der obengenannten Aufgaben wird ein Abströmbereich eines Verdichters, insbesondere eines Radialverdichters oder Diagonalverdichters, gemäß dem unabhängigen Anspruch 1 bereitgestellt. Ferner wird ein Verdichter mit einem Abströmbereich gemäß den hierein beschriebenen Ausführungsarten sowie ein Turbolader mit einem derartigen Verdichter bereitgestellt.

Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Abströmbereich eines Verdichters, insbesondere eines Radialverdichters oder Diagonalverdichters, bereitgestellt. Der Abströmbereich umfasst einen Strömungskanal, welcher von einer shroudseitigen Seitenwand und einer nabenseitigen Seitenwand begrenzt wird: Die nabenseitige Seitenwand weist in einem Bereich (14) des Verdichterradaustritts eine Kontur auf, die derart ausgebildet ist, dass die Querschnittsflächen des Strömungskanals in Strömungsrichtung abnehmen, ein Minimum durchlaufen und wieder zunehmen.

Somit wird vorteilhafterweise ein Abströmbereich bereitgestellt, der gegenüber dem Stand der Technik verbessert ist. Insbesondere, lässt sich durch die Variabilität der nabenseitige Seitenwandkontur ein vorteilhafter Querschnittsverlauf (Abnahme - Minimum - Zunahme) des Strömungskanals realisieren so dass sich die Strömung stromauf eines Diffusorbereichs stärker verzögern lässt, ohne dass sich die Strömung an der Shroud-Seite ablöst. Vorteilhafterweise, kann die Krümmung an der Shroud zunächst kontrolliert werden und anschließend der Querschnittsflächenverlauf über die HubKontur (Kontur der nabenseitigen Seitenwand) eingestellt werden. Dies führt zu einer kompakteren Bauweise und zu höheren Wirkungsgraden. Somit kann durch den erfindungsgemäßen Abströmbereich die Strömungsablösungsgefahr reduziert werden, was sich vorteilhaft auf dem Wirkungsgrad des Verdichters auswirkt. Insbesondere kann durch den erfindungsgemäßen Abströmbereich vorteilhafterweise die Verdichterradaustrittsströmung innerhalb eines kompakten Bauraums stark verzögert und vergleichmäßigt werden, ohne dass die Strömung beim Androsseln vorzeitig zum Ablösen / zur Instabilität neigt.

Gemäß einem zweiten Aspekt der Erfindung wird ein Verdichter, insbesondere ein Radialverdichter oder ein Diagonalverdichter, bereitgestellt der ein Verdichterrad und einen Abströmbereich gemäß den hierein beschriebenen Ausführungsformen umfasst. Somit kann vorteilhafterweise ein Verdichter mit verbessertem Wirkungsgrad bereitgestellt werden.

Gemäß einem dritten Aspekt der Erfindung wird ein Turbolader mit einem Verdichter gemäß den hierein beschriebenen Ausführungsformen, so dass vorteilhafterweise ein Turbolader bereitgestellt wird der gegenüber dem Stand der Technik verbessert ist.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigen:
- Figur 1: eine schematische Ansicht eines Abströmbereichs eines Verdichters, insbesondere eines Diagonalverdichters, gemäß hierin beschriebenen Ausführungsformen; und
- Figuren 2 bis 5: schematische Ansichten eines Abströmbereichs eines Verdichters gemäß weiteren hierin beschriebenen Ausführungsformen, wobei in den Figuren 2 und 5 ein Diagonalverdichter und in den Figuren 3 und 4 ein Radialverdichter dargestellt ist.

### DETAILLIERTE BESCHREIBUNG DER FIGUREN

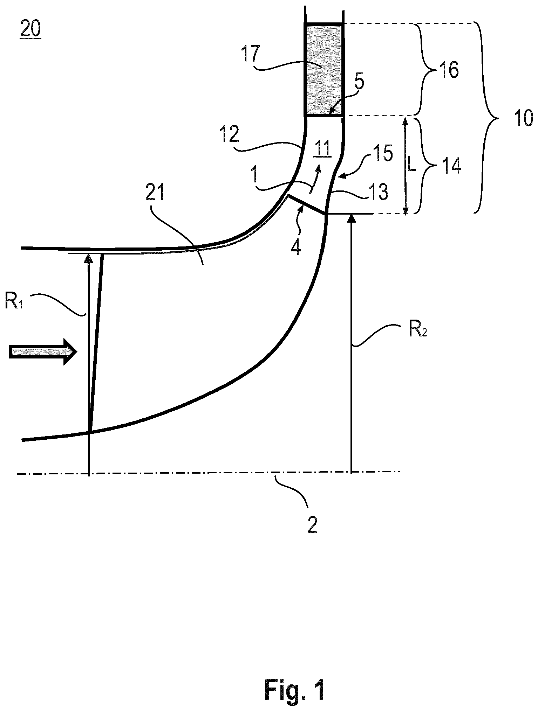

Mit Bezugnahme auf die Figuren 1 bis 5 wird ein Abströmbereich 10 eines Verdichters 20 sowie ein Verdichter 20 gemäß der vorliegenden Offenbarung beschrieben. Der Verdichter kann ein Radialverdichter oder eine Diagonalverdichter sein. Gemäß einer Ausführungsform, die mit anderen hierin beschriebenen Ausführungsformen kombiniert werden kann, umfasst der Abströmbereich 10 einen Strömungskanal 11, welcher von einer shroudseitigen Seitenwand 12 und einer nabenseitigen Seitenwand 13 begrenzt wird. Die nabenseitige Seitenwand 13 weist in einem Bereich 14 des Verdichterradaustritts eine Kontur auf, die derart ausgebildet ist, dass die Querschnittsflächen, insbesondere die meridionalen Querschnittsflächen, des Strömungskanals in Strömungsrichtung 1 abnehmen, ein Minimum durchlaufen und wieder zunehmen. Mit anderen Worten, die nabenseitige Seitenwand 13 ist derart ausgebildet, dass sich der Strömungsquerschnitt des Strömungskanals 11 in Strömungsrichtung 1 verjüngt, ein Minimum durchläuft und vor Eintritt in einen Diffusorbereich 16 wieder aufweitet. Insbesondere, ist der Konturverlauf der nabenseitigen Seitenwand 13 derart ausgebildet, dass der Abstand zur gegenüberliegenden shroudseitigen Seitenwand 12 in Strömungsrichtung 1 abnimmt, ein Minimum durchläuft und anschließend wieder zunimmt.

Somit kann die Strömung nach dem Verdichterrad zunächst vergleichmässigt, anschliessend stärker verzögert und eine Strömungsablösungsgefahr reduziert werden, was sich vorteilhaft auf den Wirkungsgrad, das Bauvolumen und die Kosten des Verdichters auswirkt.

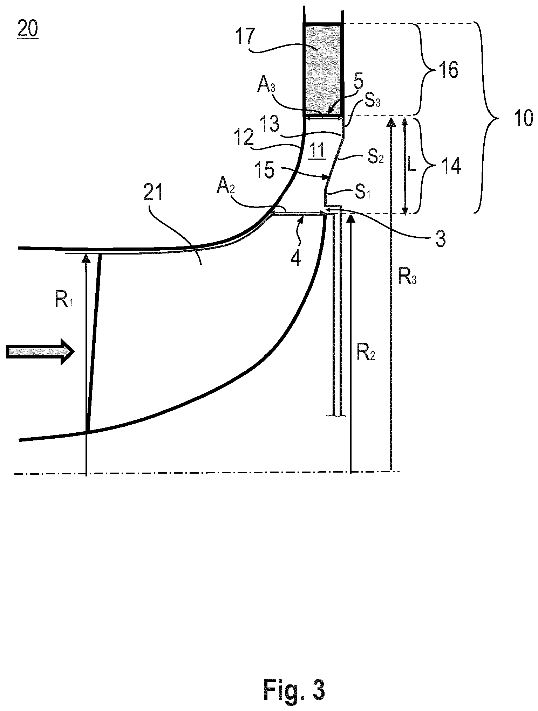

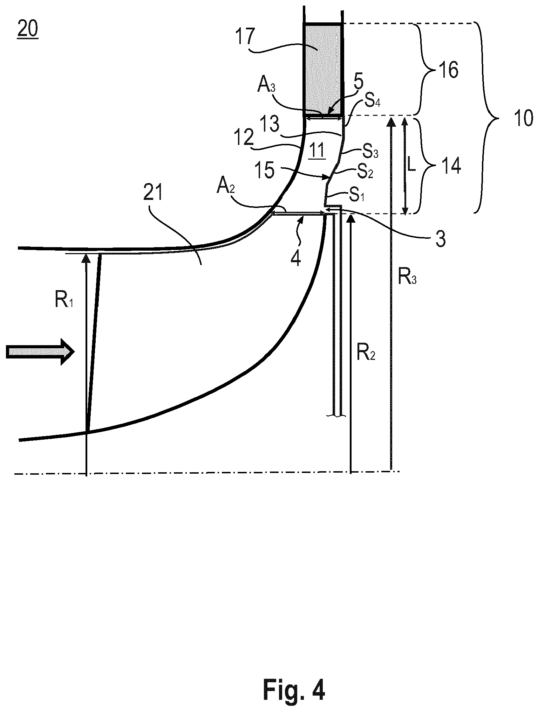

Gemäß einer Ausführungsform, die mit anderen hierin beschriebenen Ausführungsformen kombiniert werden kann, weist die die Kontur der nabenseitigen Seitenwand 13 einen S-Schlag artigen Bereich 15 auf. Insbesondere, weist die die Kontur der nabenseitigen Seitenwand einen S-Schlag-artigen Meridionalkonturverlauf zwischen Verdichterradaustritt und Diffusoreintritt auf. Der S-Schlag artige Bereich 15 kann beispielsweise durch mindestens drei Segmente S₁, S₂ und S₃ ausgebildet sein, wie es exemplarisch in Figur 3 dargestellt ist. Figur 4 zeigt eine beispielhafte Ausführungsform mit vier Segmenten S₁, S₂, S₃ und S₄. Die Segmente können Liniensegmente und/oder Kurvensegmente sein. Somit ist zu verstehen, dass der S-Schlag artige Bereich 15 durch eine polygonartige S-Kontur bereitgestellt werden kann. Alternativ kann der S-Schlag artige Bereich 15 auch einen stetigen Konturverlauf aufweisen. Der Konturverlauf kann tangentenstetig oder nicht-tangentenstetig sein. Beispielsweise, kann der S-Schlag artige Bereich 15 in Strömungsrichtung eine Rechtskrümmung und eine Linkskrümmung aufweisen, wie es beispielhaft in den Figuren 1, 2 und 5 dargestellt ist. Mit anderen Worten, der S-Schlag artige Bereich 15 kann eine zur shroudseitigen Seitenwand 12 zeigende konvexe Krümmung und eine konkave Krümmung aufweisen.

Gemäß einer Ausführungsform, die mit anderen hierin beschriebenen Ausführungsformen kombiniert werden kann, weist die nabenseitige Seitenwand 13 im Bereich 14 des Verdichterradaustritts einen stetigen Konturverlauf auf, wie es beispielhaft in den Figuren 1, 2 und 5 dargestellt ist. Alternativ oder zusätzlich kann die shroudseitige Seitenwand 12 im Bereich 14 des Verdichterradaustritts einen stetigen Konturverlauf aufweisen, wie es in den Figuren 1 bis 5 gezeigt ist. Typischerweise, ist die shroudseitige Seitenwand 12 in Strömungsrichtung 1 linksgekrümmt.

Gemäß einer Ausführungsform, die mit anderen hierin beschriebenen Ausführungsformen kombiniert werden kann, weist der Strömungskanal 11 im Bereich 14 des Verdichterradaustritts eine Länge L auf, wie es in den Figuren 1 bis 5 dargestellt ist. Die Länge L des Strömungskanals 11 erstreckt sich von einer Verdichterradaustrittskante 4 bis zu einem Eintritt 5 in den Diffusorbereich 16, insbesondere bis zu einer Diffusorschaufeleintrittskante. Der S-Schlag artige Bereich 15 kann gemäß einer Ausführungsform, die mit anderen hierin beschriebenen Ausführungsformen kombiniert werden kann, näher an der Verdichterradaustrittskante 4 als am Eintritt 5 des Diffusorbereichs angeordnet sein. Beispielsweise, kann der S-Schlag artige Bereich 15 nach der Verdichterradaustrittskante innerhalb 50% der Länge L des Strömungskanals 11 angeordnet sein. Insbesondere kann das Strömungsquerschnittsminimum, das durch den S-Schlag artigen Bereich 15 des Strömungskanals 11 gebildet wird, innerhalb 50% der Länge L des Strömungskanals 11 nach der Verdichterradaustrittskante angeordnet sein.

Gemäß einer Ausführungsform, die mit anderen hierin beschriebenen Ausführungsformen kombiniert werden kann, weist der Strömungskanal 11 eine Verdichterradaustrittsquerschnittsfläche A₂ und eine Diffusoreintrittsquerschnittsfläche A₃ auf, wobei ein Verhältnis A₃/A₂ aus einem Bereich von 0,80 ≤ A₃/A₂ ≤ 1,2, insbesondere aus einem Bereich von 0,90 ≤ A3/A2 ≤ 1,1, ausgewählt ist. Typischerweise ist die Verdichterradaustrittsquerschnittsfläche A2, eine Zylinderfläche (bei parallel zur Rotationsachse verlaufender Verdichterradaustrittskante) oder eine Kegelmantelfläche (bei zur Rotationsachse geneigter Verdichterradaustrittskante) stromab der Verdichterradaustrittskante 4. Ebenso kann die Diffusoreintrittsquerschnittsfläche A₃ eine Zylinderfläche (bei parallel zur Rotationsachse verlaufender Diffusoreintrittskante) oder eine Kegelmantelfläche (bei einer zur Rotationsachse geneigter Diffusoreintrittskante) sein. In diesem Zusammenhang sei darauf hingewiesen, dass die Querschnittsflächen des Strömungskanals die in Strömungsrichtung abnehmen, ein Minimum durchlaufen und wieder zunehmen, Zylinderflächen und/oder Kegelmantelflächen sein können.

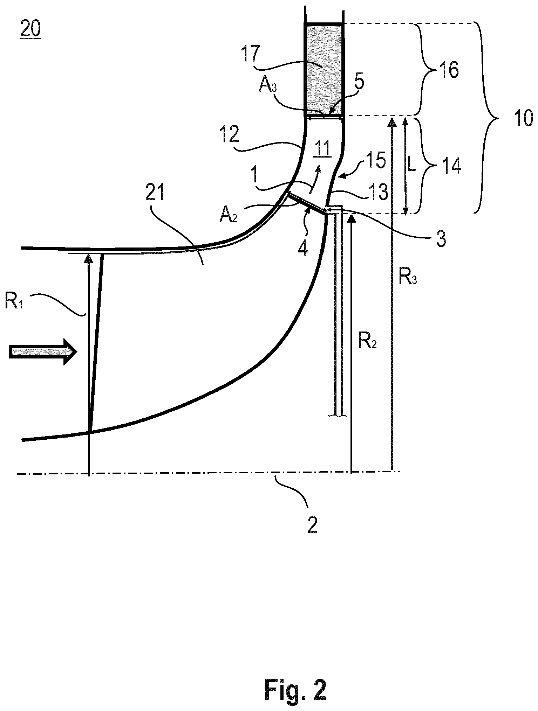

Gemäß einer Ausführungsform, die mit anderen hierin beschriebenen Ausführungsformen kombiniert werden kann, wie es beispielhaft in den Figuren 2 bis 5 gezeigt ist, kann in der nabenseitigen Seitenwand 13, insbesondere am Verdichterradaustritt, ein Spalt 3 (z.B. eine Leckströmungsöffnung)ausgebildet sein.

Gemäß einer Ausführungsform, die mit anderen hierin beschriebenen Ausführungsformen kombiniert werden kann, weist der Strömungskanal 11 einen Diffusorbereich 16 auf, der sich an den Bereich 14 des Verdichterradaustritts anschließt. Der Diffusorbereich kann schaufellos sein (nicht explizit dargestellt) oder eine Vielzahl von Diffusorschaufeln 17 aufweisen, wie es in den Figuren 1 bis 5 schematisch gezeigt ist.

Gemäß einem weiteren Aspekt der vorliegenden Offenbarung, wird ein Verdichter 20, insbesondere ein Radialverdichter oder ein Diagonalverdichter, bereitgestellt, der ein Verdichterrad 21 und einen Abströmbereich 10 gemäß den hierein beschriebenen Ausführungsformen umfasst.

Gemäß einer Ausführungsform, die mit anderen hierin beschriebenen Ausführungsformen kombiniert werden kann, weist das Verdichterrad 21 einen Verdichterradeintrittsradius R₁ und einem Verdichterradaustrittsradius R₂ auf. Ein Verhältnis des Verdichterradeintrittsradius R₁ zum Verdichterradaustrittsradius R₂ ist typischerweise aus einem Bereich von 0,65 ≤R₁/R₂, insbesondere aus einem Bereich von 0,7≤ R₁/R₂, ausgewählt.

Gemäß einer Ausführungsform, die mit anderen hierin beschriebenen Ausführungsformen kombiniert werden kann, umfasst der Verdichter einen Diffusorbereich 16, der von einer Rotationsachse 2 des Verdichterrades 21 in einem radialen Abstand R₃ angeordnet ist. Typischerweise ist ein Verhältnis des radialen Abstands R₃ zum Verdichterradaustrittsradius R₂ aus einem Bereich von 1,05 ≤ R₃/R₂ ≤ 1,30, insbesondere aus einem Bereich von 1,10 ≤ R₃/R₂ ≤ 1,25, ausgewählt.

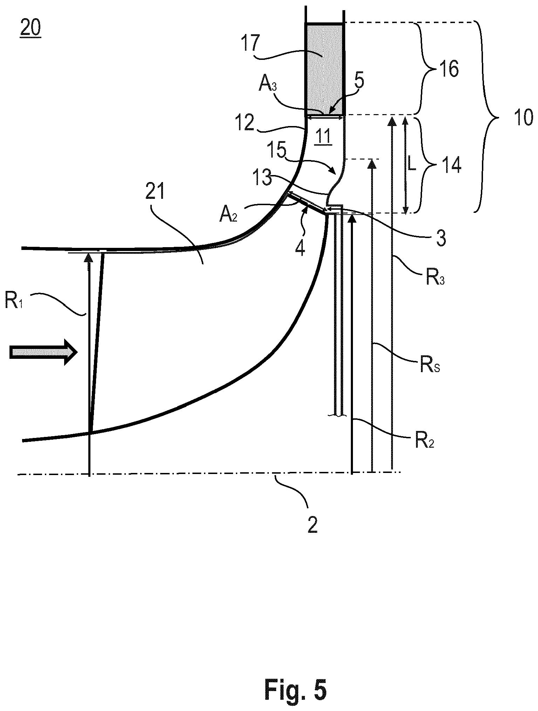

Gemäß einer Ausführungsform, die mit anderen hierin beschriebenen Ausführungsformen kombiniert werden kann, umfasst die Kontur der nabenseitigen Seitenwand 13 einen S-Schlag artigen Bereich 15 gemäß einer der hierin beschriebenen Ausführungsformen. Wie beispielhaft in Figur 5 dargestellt ist kann der S-Schlag artige Bereich 15 in Strömungsrichtung ein Ende in einem Abstand R_{S} von der Rotationsachse 2 des Verdichterrades 21 aufweisen. Insbesondere kann der Abstand R_{S}, der Verdichterradaustrittsradius R₂ und der radialen Abstand R₃ des Diffusorbereichs 16 von der Rotationsachse 2 des Verdichterrades 21 derart ausgewählt sein, dass die Bedingung 0,4 ≤ (R_{S}-R₂)/(R₃-R₂) ≤1,0 erfüllt ist.

Im Lichte vorliegenden Offenbarung kann somit gemäß einem weiteren Aspekt, ein Turbolader bereitgestellt werden, der einen Verdichter 20, insbesondere ein Radialverdichter oder ein Diagonalverdichter, gemäß den hierein beschriebenen Ausführungsformen, umfasst. In diesem Zusammenhang sei angemerkt, dass die Merkmale, die in Zusammenhang mit den beispielhaften Ausführungsformen des Radialverdichters (Figuren 2, 3 und 4) beschrieben sind auch auf die beispielhaften Ausführungsformen des Diagonalverdichters (Figuren 1 und 5) übertragen werden können und umkehrt.

Die hierein beschriebenen Ausführungsformen sind insbesondere vorteilhaft für hochschluckende Radial- bzw. Diagonalverdichter. Im Vergleich zum Stand der Technik, kann die Verdichterradabströmung vorteilhaft geführt, vergleichmäßigt und in geringem Bauraum stärker verzögert werden. Wird im Diffusor ein Leitgitter (Diffusorschaufeln) verwendet, so können entweder die Leitschaufeln näher ans Laufrad herangeschoben oder das Mach-Zahl-Niveau an den Diffusorschaufeleintrittskanten weiter reduziert werden. Die Reduktion der Machzahl sowie die Vergleichmäßigung der Diffusorschaufel-Anströmung führen zu einer Wirkungsgradsteigerung. Die Strömungsvergleichmäßigung sowie die Möglichkeit der Reduktion der shroudseitigen Kontur-Krümmung führen zu Stabilitätsverbesserungen. Durch die Reduktion des Bauraums können die Produktionskosten und die Kosten des Produkts gesenkt werden.

Mit anderen Worten, die hierin beschriebenen Ausführungsformen können folgende Vorteile aufweisen. Stetige, insbesondere tangentenstetige, als auch nicht stetige, insbesondere nicht-tangentenstetige, Hub-KonturVerläufe sind möglich, welche die Strömungsablösungsgefahr reduzieren und wirkungsgradmäßig vorteilhaft sind. Die Shroudkontur-Krümmung in der Meridionalansicht kann reduziert werden, ohne dass die Strömungsfläche zu stark reduziert wird. Die Strömungsablösungsgefahr an der Shroud kann so reduziert werden, ohne dass die Radialkomponente der Strömung im Mittel zu stark beschleunig wird. Der Flächenverlauf im Diffusor (stromab des Verdichterrads) kann gezielt so ausgelegt werden, dass der Impulsaustausch an der Shroud-Seite gefördert wird (durch Reduktion der Shroud-Krümmung sowie durch den mit der Hub- und Shroud-Kontur gebildeten Pinch-Bereich) und die Strömung am Hub (z.B. stromauf der Diffusorschaufelvorderkante) maximal verzögert wird. Somit kann die Verdichterradaustrittsströmung innerhalb eines kompakten Bauraums stark verzögert und vergleichmäßigt werden, ohne dass die Strömung beim Androsseln vorzeitig zum Ablösen und zur Instabilität neigt.

### BEZUGZEICHENLISTE

1 Strömungsrichtung
2 Rotationsachse
3 Spalt
4 Verdichterradaustrittskante
5 Eintritt in den Diffusorbereich
10 Abströmbereich
11 Strömungskanal
12 shroudseitge Seitenwand
13 nabenseitge Seitenwand
14 Bereich des Verdichterradaustritts
15 S-Schlag artige Kontur
16 Diffusorbereich
17 Diffusorschaufeln
20 Verdichter
21 Verdichterrad
R₁ Verdichterradeintrittsradius
R₂ Verdichterradaustrittsradius
R₃ Radialer Abstand des Eintritts in den Diffusorbereich zur Rotationsachse
R_{S} Radialer Abstand des Endes des S-Schlag artigen Bereichs in Strömungsrichtung zur Rotationsachse
S1,S2,S3,S4 Segmente der nabenseitigen Seitenwandkontur

## Patentansprüche

1. Abströmbereich (10) eines Verdichters (20), insbesondere eines Radialverdichters oder Diagonalverdichters, mit einem Strömungskanal (11), welcher von einer shroudseitigen Seitenwand (12) und einer nabenseitigen Seitenwand (13) begrenzt wird, wobei die nabenseitige Seitenwand (13) in einem Bereich (14) des Verdichterradaustritts eine Kontur aufweist, die derart ausgebildet ist, dass die Querschnittsflächen des Strömungskanals (11) in Strömungsrichtung (1) abnehmen, ein Minimum durchlaufen und wieder zunehmen.

2. Abströmbereich (10) nach Anspruch 1, wobei die Kontur einen S-Schlag artigen Bereich (15) aufweist.

3. Abströmbereich (10) nach Anspruch 2, wobei der S-Schlag artige Bereich (15) durch mindestens drei Segmente, insbesondere Liniensegmente und/oder Kurvensegmente, gebildet wird.

4. Abströmbereich (10) nach einem der Ansprüche 1 bis 3, wobei die nabenseitige Seitenwand (13) und/oder die shroudseitige Seitenwand (12) im Bereich des Verdichterradaustritts (14) stetige Konturverläufe aufweisen.

5. Abströmbereich (10) nach einem der Ansprüche 2 bis 4, wobei der Strömungskanal (11) im Bereich (14) des Verdichterradaustritts eine Länge L aufweist, die sich von einer Verdichterradaustrittskante (4) bis zu einem Eintritt (5) in den Diffusorbereich, insbesondere bis zu einer Diffusorschaufeleintrittskante, erstreckt, und wobei der S-Schlag artige Bereich (15) näher an der Verdichterradaustrittskante als am Eintritt des Diffusorbereichs angeordnet ist, insbesondere nach der Verdichterradaustrittskante innerhalb 50% der Länge L des Strömungskanals (11) angeordnet ist.

6. Abströmbereich (10) nach einem der Ansprüche 1 bis 5, wobei der Strömungskanal (11) eine Verdichterradaustrittsquerschnittsfläche A2 und eine Diffusoreintrittsquerschnittsfläche A3 aufweist, wobei ein Verhältnis A3/A2 aus einem Bereich von 0,80 ≤ A3/A2 ≤ 1,2, insbesondere aus einem Bereich von 0,90 ≤ A3/A2 ≤ 1,1, ausgewählt ist.

7. Abströmbereich (10) nach einem der Ansprüche 1 bis 6, wobei in der nabenseitigen Seitenwand (13), insbesondere am Verdichterradaustritt, ein Spalt (3) ausgebildet ist.

8. Abströmbereich (10) nach einem der Ansprüche 1 bis 7, wobei der Strömungskanal (11) einen Diffusorbereich (16) aufweist, der sich an den des Bereichs des Verdichterradaustritts (14) anschließt.

9. Abströmbereich (10) nach Anspruch 8, wobei der Diffusorbereich (16) eine Vielzahl von Diffusorschaufeln (17) aufweist.

10. Verdichter (20), insbesondere Radialverdichter oder Diagonalverdichter, mit einem Verdichterrad (21) und einem Abströmbereich (10) gemäß einem der Ansprüche 1 bis 9.

11. Verdichter (20) nach Anspruch 10, wobei das Verdichterrad (21) einen Verdichterradeintrittsradius R₁ und einem Verdichterradaustrittsradius R₂ aufweist, wobei ein Verhältnis R₁/R₂ aus einem Bereich von 0,65 ≤ R₁/R₂, insbesondere aus einem Bereich von 0,7≤ R₁/R₂, ausgewählt ist.

12. Verdichter (20) nach Anspruch 10 oder 11, mit einem Diffusorbereich (16), der von einer Rotationsachse (2) des Verdichterrades (21) in einem radialen Abstand R3 angeordnet ist, wobei ein Verhältnis des radialen Abstands R3 zum Verdichterradaustrittsradius R2 aus einem Bereich von 1,05 ≤ R3/R2 ≤ 1,30, insbesondere aus einem Bereich von 1,10 ≤ R3/R2 ≤ 1,25 ausgewählt ist.

13. Verdichter (20) nach einem der Ansprüche 10 bis 12, wobei die Kontur der nabenseitigen Seitenwand (13) einen S-Schlag artigen Bereich (15) umfasst, wobei der S-Schlag artigen Bereichs (15) in Strömungsrichtung ein Ende in einem Abstand R_{S} von der Rotationsachse (2) des Verdichterrades (21) umfasst, und wobei Rs, der Verdichterradaustrittsradius R2 und der radialen Abstand R3 des Diffusorbereichs (16) von einer Rotationsachse (2) des Verdichterrades (21) derart ausgewählt sind, dass die Bedingung 0,4 ≤ (RS-R2)/(R3-R2) ≤1,0 erfüllt ist.

14. Turbolader mit einem Verdichter (20) nach einem der Ansprüche 10 bis 13.
